**Europäisches Patentamt**

**European Patent Office**

**Office européen des brevets**

(11) Veröffentlichungsnummer : **0 379 233 B1**

# (12) EUROPÄISCHE PATENTSCHRIFT

(45) Veröffentlichungstag der Patentschrift :
**23.12.92 Patentblatt 92/52**

(51) Int. Cl.⁵ : **B65D 90/58, F16K 5/06**

(21) Anmeldenummer : **90200023.1**

(22) Anmeldetag : **05.01.90**

(54) **Verschlussvorrichtung.**

(30) Priorität : **20.01.89 DE 3901576**

(43) Veröffentlichungstag der Anmeldung :
**25.07.90 Patentblatt 90/30**

(45) Bekanntmachung des Hinweises auf die
Patenterteilung :
**23.12.92 Patentblatt 92/52**

(84) Benannte Vertragsstaaten :
**DE IT**

(56) Entgegenhaltungen :
**FR-A- 713 966**
**FR-A- 2 393 215**
**US-A- 1 770 900**
**US-A- 4 137 935**

(73) Patentinhaber : **METALLGESELLSCHAFT Aktiengesellschaft**
**Reuterweg 14**
**W-6000 Frankfurt am Main (DE)**

(72) Erfinder : **Klaus, Zapke**
**Südring 5**
**W-6457 Maintal 1 (DE)**
Erfinder : **Löffler, Johannes, Dr.**
**P.-Andrich-Weg 3**
**W-6380 Bad Homburg 1 (DE)**

## Beschreibung

Die Erfindung betrifft eine Verschlußvorrichtung mit in einem Gehäuse mit Einlauf- und Auslaßöffnung angeordnetem Drehschieber zum Unterbrechen des Durchlaufs von riesel- und fließfähigem Material durch gasdichtes Verschließen der Auslaßöffnung bei gleichzeitigem Verschließen der Einlauföffnung, wobei am Drehschieber ein Verschlußstück federnd angeordnet ist, welches mit dem Ventilsitz der Auslaßöffnung zusammenwirkt.

Eine solche Vorrichtung ist in FR-A-2 393 215 beschrieben. Hierbei sind mit dem Drehschieber zwei gegenüberliegend angeordnete Verschlußstücke in Form gebogener Platten verbunden, die gleichzeitig die Einlauföffnung und die Auslaßöffnung verschließen. Die Platten stützen sich am Drehschieber federnd ab, sie sind gegenüber dem Drehschieber nicht drehbar.

Der Erfindung liegt die Aufgabe zugrunde, dafür zu sorgen, daß das mit dem Ventilsitz der Auslaßöffnung zusammenwirkende Verschlußstück in der Lage ist, bei jedem Schließvorgang eine veränderte Position einzunehmen. Erfindungsgemäß gelingt dies bei der eingangs genannten Vorrichtung dadurch, daß das Verschlußstück um eine senkrecht zur Drehachse des Drehschiebers verlaufende Achse drehbar ausgebildet ist und daß zwischen dem Verschlußstück und dem Drehschieber eine Druckfeder neben der Drehachse des Verschlußstückes angeordnet ist, welche dieses exzentrisch druckbelastet.

Durch die Drehbarkeit wird das Verschlußstück, wenn es sich nicht in der Schließlage befindet, durch zufällig auftretende Drehmomente mehr oder weniger um seine Achse gedreht und nimmt beim anschließenden Schließvorgang eine veränderte Lage auf dem ortsfesten Ventilsitz ein. Die Drehung des Verschlußstücks ist weder durch Drehen von Hand noch durch einen Motor erforderlich.

Für die Erfindung ist es zusätzlich wichtig, daß zwischen dem Verschlußstück und dem Drehschieber eine Druckfeder neben der Drehachse des Verschlußstücks angeordnet ist. Diese Druckfeder sorgt für Elastizität zwischen dem Drehschieber und dem Verschlußstück und sie drückt das Verschlußstück in der Schließlage auf den Ventilsitz. Gleichzeitig verstärkt die Druckfeder durch ihre asymmetrische Anordnung neben der Drehachse des Verschlußstücks die Wirkung eines Drehmoments beim Bewegen des Verschlußstücks. Durch ein solches Drehmoment wird das Verschlußstück, wie bereits dargestellt, um einen mehr oder weniger großen Winkel um seine Drehachse gedreht.

Vorteilhafterweise wird das Verschlußstück in Form einer Kugelkalotte ausgebildet und das Gehäuse mit einer inneren Führungsfläche versehen, die an die Kalottenoberfläche angepaßt ist. Beim Bewegen des Verschlußstücks vom Ventilsitz in die Öffnungslage gleitet das Verschlußstück mit seiner kugelförmigen Außenseite entlang der Führungsfläche und schiebt dadurch Feststoffe, die sich in der Nähe des Ventilsitzes angesammelt haben, zur Seite.

Unter der Wirkung der außermittig angebrachten Druckfeder führt das Verschlußstück Drehbewegungen immer dann aus, wenn es vom Ventilsitz weg oder auf den Ventilsitz zu bewegt wird, weil die Reibung mit dem Ventilsitz und/oder der Führungsfläche zu nicht vermeidbaren und im vorliegenden Fall gewollten Drehmomenten führen. Hierbei tritt auch eine erwünschte Läppung zwischen dem Verschlußstück und dem Ventilsitz auf. Wichtig ist, daß für eine gute Drehbarkeit des Verschlußstücks um seine Symmetrieachse, die etwa senkrecht zur Drehachse des Drehschiebers steht, gesorgt wird. Beim Realisieren dieser Drehbarkeit ist darauf zu achten, daß das Verschlußstück so mit dem Drehschieber gekoppelt ist, daß es beim Drehen des Drehschiebers von diesem in die Öffnungs- bzw. Schließlage mitgenommen wird. Diese Kopplung kann durch ein Verbindungselement oder auch durch die Formgebung erfolgen.

Ausgestaltungsmöglichkeiten der Verschlußvorrichtung werden mit Hilfe der Zeichnung erläutert. Es zeigt:

Fig. 1 einen Längsschnitt nach der Linie I-I in Fig. 2 durch die schematisch dargestellte Verschlußvorrichtung,

Fig. 2 einen Längsschnitt nach der Linie II-II in Fig. 1 durch den Drehschieber und das Verschlußstück,

Fig. 3 den Bereich der Drehverbindung zwischen dem Drehschieber und dem Verschlußstück in gegenüber Fig. 1 vergrößerter Darstellung,

Fig. 4 eine Draufsicht auf das Verschlußstück der Fig. 1 bis 3,

Fig. 5 eine zweite Variante der Ausbildung des Drehschiebers und des Verschlußstücks im Längsschnitt gemäß Fig. 1,

Fig. 6 eine Draufsicht auf die Zentrierscheibe der Fig. 5 und

Fig. 7 eine dritte Möglichkeit der Ausgestaltung des Drehschiebers und des Verschlußstücks im Längsschnitt gemäß Fig. 1.

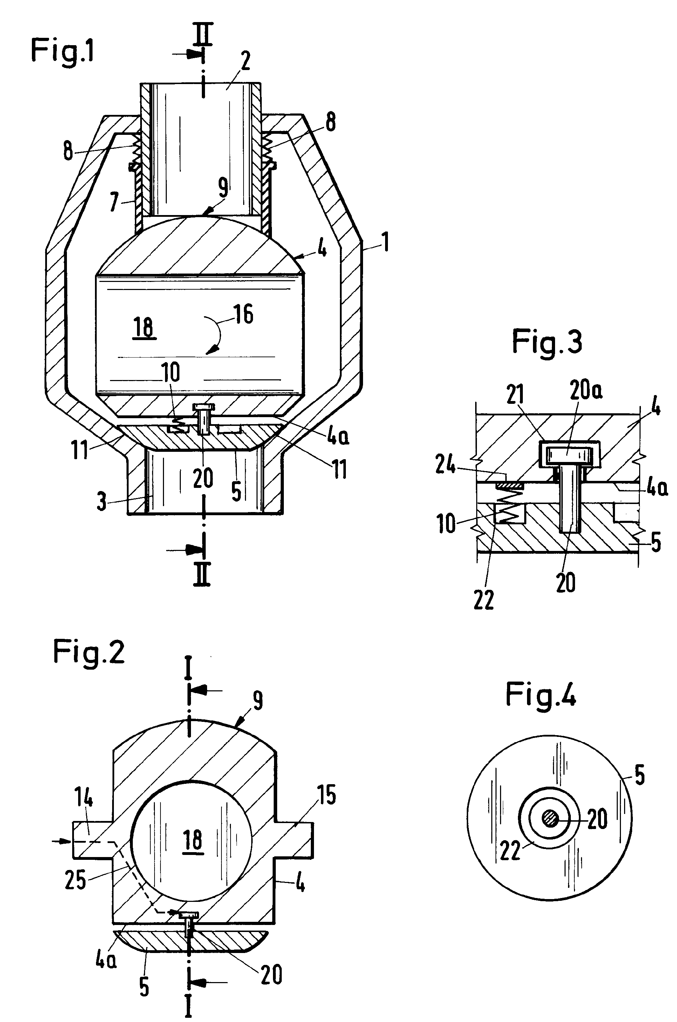

Die Verschlußvorrichtung der Fig. 1 weist das Gehäuse (1) mit dem Einlaufkanal (2) und dem Auslaßkanal (3), den Drehschieber (4) und das Verschlußstück (5) auf. Den Einlaufkanal (2), der mit dem Gehäuse verbunden ist, umgibt ein Dichtungsring (7), auf welchen Druckfedern (8) einwirken. In der in Fig. 1 dargestellten Schließlage stützt sich der Dichtungsring (7) auf einer Kugelfläche (9) des Drehschiebers (4) ab, wodurch der Durchfluß von körnigen und staubförmigen Feststoffen durch den Einlaufkanal (2) nach unten gestoppt ist. Die Gasdichtigkeit der Verschlußvorrichtung wird durch das Verschlußstück (5) erreicht, das durch eine Druckfeder (10) gegen den zum Gehäuse (1) gehörenden Ventilsitz (11) gedrückt wird.

Zum Öffnen des Verschlusses wird der Drehschieber (4) mit einem nicht dargestellten Antrieb um 90° um die Lagerzapfen (14) und (15), vgl. Fig. 2, um eine Achse gedreht, die senkrecht zur Zeichenebene der Fig. 1 steht. Diese Drehung aus der Schließlage in die Öffnungslage ist in Fig. 1 durch den gebogenen Pfeil (16) angedeutet. Durch die Drehung des Drehschiebers (4) aus der Schließlage in die Öffnungslage wird auch das Verschlußstück (5) vom Ventilsitz (11) weg bewegt und der zum Drehschieber gehörende Zentralkanal (18), vgl. Fig. 1 und 2, gelangt in die fluchtende Lage zum Verbinden des Einlaufkanals (2) mit dem Auslaßkanal (3).

Die mit dem Ventilsitz (11) zusammenwirkende Außenseite des Verschlußstücks (5) hat die Form eines Kugelabschnitts. Durch einen Zentrierzapfen (20), vgl. Fig. 1 bis 3, der mit dem Verschlußstück (5) verbunden ist, ist das Verschlußstück am Drehschieber (4) drehbar gelagert. Dadurch ist das Verschlußstück um seine Symmetrieachse, die in Fig. 1 mit der Linie II-II und in Fig. 2 mit der Linie I-I zusammenfällt, drehbar. Der Zapfen (20) sitzt mit seinem verbreiterten Kopf (20a) mit etwas Spiel in einer in Fig. 3 dargestellten Lagerkammer (21). In einigem Abstand neben dem Zentrierzapfen (20) befindet sich die Druckfeder (10), die zumindest entweder mit dem Drehschieber (4) oder dem Verschlußstück (5) nicht verbunden ist und vorzugsweise weder zum einen noch zum anderen Teil eine Verbindung besitzt. Die Feder (10) sitzt in einer sacklochartigen oder auch ringförmigen Vertiefung (22), vgl. insbesondere Fig. 3 und 4. Damit die Druckfeder (10) ungehindert über die Flachseite (4a) des Drehschiebers (4) gleiten kann, ist sie gemäß Fig. 3 mit einer Gleitscheibe (24) verbunden. Das andere Ende der Druckfeder kann ebenfalls mit einer nicht dargestellten Gleitscheibe versehen sein, falls die Druckfeder im Verschlußstück (4) nicht in einem Sackloch sondern in einer ringförmigen Aussparung (22) sitzt.

Wichtig ist nur, daß der radiale Abstand der Druckfeder (10) von der Drehachse des Verschlußstücks beim Betrieb der Verschlußvorrichtung ungefähr konstant bleibt. Wie bereits erläutert, ist es ja die Aufgabe der Druckfeder (10), das Verschlußstück (5) auf den Ventilsitz (11) zu drücken und bei Bewegungen des Drehschiebers (4) eine gewisse Verdrehung, und sei sie auch nur minimal, des Verschlußstücks (5) um seine Drehachse herbeizuführen. Die Drehachse des Verschlußstücks (5) fällt im Ausführungsbeispiel der Fig. 1 bis 4 mit der Längsachse des Zentrierzapfens (20) zusammen. Die Drehbewegungen des Verschlußstücks (5) bewirken, daß sich die Dichtungsflächen des Verschlußstücks und des Ventilsitzes (11) im Betrieb gegenseitig einglätten und daß Feststoffe vom Ventilsitz entfernt werden, so daß auch über eine lange Betriebszeit eine hohe Gasdichtigkeit erhalten bleibt.

Der Abstand zwischen der Flachseite (4a) des Drehschiebers (4) und der ihr zugewandten Oberseite des Verschlußstücks (5) beträgt zumeist etwa 0,5 bis 3 mm. Dieser Abstand soll nicht zu groß sein, damit Feststoffe nicht oder nur schwer eindringen können. Es kann zweckmäßig sein, über eine in Fig. 2 gestrichelt angedeutete Leitung (25) ständig oder periodisch von außen ein Spülfluid in die Lagerkammer (21) und von da in den Zwischenraum zwischen Drehschieber (4) und Verschlußstück (5) einzuführen. Als Spülfluid kommt z.B. Wasserdampf oder auch ein flüssiges Schmiermittel in Frage. Eine solche Spülleitung kann in nicht dargestellter Weise auch dazu verwendet werden, vom Drehschieber (4) aus den Ventilsitz (11) und seine Umgebung zu spülen.

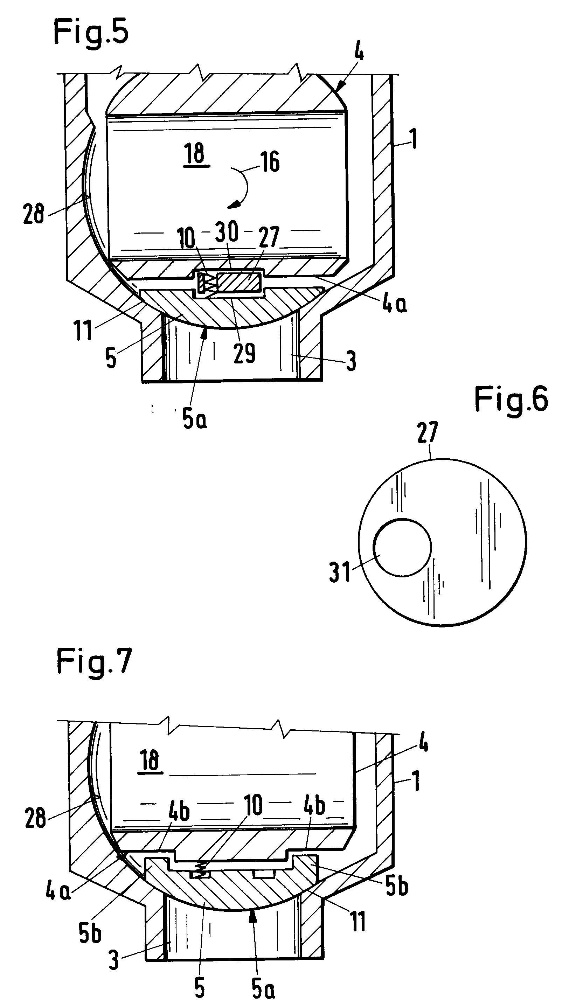

Die in Fig. 5 und 6 dargestellte Variante der Verschlußvorrichtung unterscheidet sich von der Variante der Fig. 1 bis 4 dadurch, daß auf den Zentrierzapfen (20) verzichtet wurde und das Verschlußstück (5) nunmehr durch eine Zentrierscheibe (27) und eine Führungsfläche (28) geführt wird. Auch hierbei ist die Drehbarkeit des Verschlußstücks um seine Symmetrieachse, die senkrecht zur Drehachse des Drehschiebers (4) steht, gewährleistet. Die zylindrische Zentrierscheibe (27), deren Draufsicht Fig. 6 zeigt, sitzt zum Teil in einer Aussparung (29) im Verschlußstück (4) und ragt in eine weitere Aussparung (30) in der Flachseite (4a) des Drehschiebers (4) hinein. Die beiden Aussparungen (29) und (30) bilden eine zylindrische Kammer, in welcher die Zentrierscheibe (27) mit einigem Spiel sitzt. Die Rotationsachse der Zentrierscheibe (27), die in der Darstellung der Fig. 6 senkrecht zur Zeichenebene steht, fällt mit der Drehachse des Verschlußstücks (5) zusammen. Die Zentrierscheibe (27) weist im Abstand von dieser Rotationsachse eine Bohrung (31) auf, in welcher die Druckfeder (10) sitzt. Dadurch ist gewährleistet, daß der radiale Abstand der Druckfeder (10) von der Rotations- und Drehachse des Verschlußstücks (5) immer konstant gehalten wird. Die Zentrierscheibe (27) wirkt bei der Bewegung des Drehschiebers (4) als Mitnehmer, der das Verschlußstück (5) in die Öffnungs- oder Schließlage führt.

Bei der Ausgestaltung der Verschlußvorrichtung gemäß Fig. 5 und 6 gibt es keine feste Verbindung zwischen dem Drehschieber (4) und dem Verschlußstück (5). Das Verschlußstück (5) hat die Form einer Kugelkalotte und der Ventilsitz (11) sowie die Führungsfläche (28) an einem Abschnitt des Gehäuseinneren sind als Kugelflächen ausgebildet. Beim Bewegen des Verschlußstücks (4) von der Öffnungs- in die Schließlage und zurück gleitet das Verschlußstück mit seiner äußeren Kugelfläche (5a) stets entlang der Kugelflächenführung (28), so daß der Abstand des Verschlußstücks (5) von der Flachseite (4a) des Drehschiebers stets ungefähr konstant bleibt. Die Gleitbewegung des Verschlußstücks (5) entlang der Führungsfläche (28) führt dazu, daß Feststoffe, die in diesen Bereich eingedrungen sind, weggeschoben werden. Zusätzlich kann eine nicht dargestellte Spülung dieser Flächen erfolgen. Eine Spülung, etwa wie in Fig. 2 dargestellt, kann auch in der Aussparung (30) des Drehschiebers (4) münden.

Mit Hilfe der Fig. 7 wird eine Variante erläutert, bei der die Formgebung von Verschlußstück (5) und Drehschieber (4) dafür sorgt, daß sich das Verschlußstück um seine Symmetrieachse drehen läßt. Das Verschlußstück (5) weist hier einen ringförmigen Vorsprung (5b) auf, der in eine ringförmige Eintiefung (4b) in der Flachseite (4a) des Drehschiebers eingreift. Der Ventilsitz (11) und die kugelförmige Führungsfläche (28) sind genauso ausgestaltet, wie bereits zusammen mit Fig. 5 und 6 beschrieben, sie wirken mit der Kugeloberfläche (5a) des Verschlußstücks zusammen. Die Druckfeder (10) befindet sich im Abstand neben der Rotations- und Symmetrieachse des Verschlußstücks (5), ihre Anordnung ist die gleiche, wie sie bereits zusammen mit Fig. 1 bis 4 beschrieben wurde.

**Patentansprüche**

1. Verschlußvorrichtung mit in einem Gehäuse (1) mit Einlauf- und Auslaßöffnung angeordnetem Drehschieber (4) zum Unterbrechen des Durchlaufs von riesel- und fließfähigem Material durch gasdichtes Verschließen der Auslaßöffnung (3) bei gleichzeitigem Verschließen der Einlauföffnung (2), wobei am Drehschieber ein Verschlußstück (5) federnd angeordnet ist, welches mit dem Ventilsitz (11) der Auslaßöffnung zusammenwirkt, dadurch gekennzeichnet, daß das Verschlußstück um eine senkrecht zur Drehachse des Drehschiebers verlaufende Achse (II-II) drehbar ausgebildet ist und daß zwischen dem Verschlußstück und dem Drehschieber eine Druckfeder (10) neben der Drehachse des Verschlußstückes angeordnet ist, welche dieses exzentrisch druckbelastet.

2. Verschlußvorrichtung nach Anspruch 1, dadurch gekennzeichnet, daß das Verschlußstück (5) in Form einer Kugelkalotte ausgebildet ist und das Gehäuse (1) eine Führungsfläche (28) aufweist, die an die Kalottenoberfläche angepaßt ist.

3. Verschlußvorrichtung nach Anspruch 2, dadurch gekennzeichnet, daß zwischen dem Drehschieber (4) und dem Verschlußstück (5) eine Zentrierscheibe (27) koaxial zur Drehachse des Verschlußstücks angeordnet ist, die jeweils in einer Aussparung (29,30) im Drehschieber und im Verschlußstück sitzt.

4. Verschlußvorrichtung nach Anspruch 3, dadurch gekennzeichnet, daß die Druckfeder (10) in einer Bohrung (31) in der Zentrierscheibe (27) angeordnet ist.

5. Verschlußvorrichtung nach Anspruch 2, dadurch gekennzeichnet, daß das Verschlußstück (5) mit einem ringförmigen Vorsprung (5b) in den Drehschieber (4) eingreift.

6. Verschlußvorrichtung nach Anspruch 1 oder einem der folgenden, dadurch gekennzeichnet, daß an der Einlauföffnung (2) ein Dichtungsring (7), welcher sich auf der Oberfläche des Drehschiebers (4) abstützt, angebracht ist.

7. Verschlußvorrichtung nach Anspruch 1 oder einem der folgenden, dadurch gekennzeichnet, daß im Bereich zwischen dem Drehschieber (4) und dem Verschlußstück (5) und/oder im Bereich des Ventilsitzes (11) eine Zuleitung (25) für ein Spülfluid mündet.

**Claims**

1. A shut-off device comprising a rotary valve (4), which is arranged in a housing (1) having an inlet opening and an outlet opening and is adapted to gas-tightly close the outlet opening (3) and to close the inlet opening (2) at the same time in order to interrupt the passing of material which is adapted to trickle or flow, which rotary valve is provided with a resiliently mounted valve member (5), which cooperates with the valve seat (11) of the outlet opening, characterized in that the valve member is designed to be rotatable about an axis (II-II) which is at right angles to the axis of rotation of the rotary valve and a compression spring (10) disposed beside the axis of rotation of the valve member and is arranged between the valve member and the rotary valve and applies excentric pressure to the valve member.

2. A shut-off device according to claim 1, characterized in that the valve member (5) consists of a spherical cap and the housing (1) has a guiding surface (28), which conforms to the surface of the spherical cap.

3. A shut-off device according to claim 2, characterized in that a centring disk (27), which is coaxial to the axis of rotation of the valve member, is arranged between the rotary valve (4) and the valve member (5) and extends in recesses (29, 30) formed in the rotary valve and in the valve member.

4. A shut-off device according to claim 3, characterized in that the compression spring (10) is arranged in a bore (31) of the centring disk (27).

5. A shut-off device according to claim 2, characterized in that the valve member (5) comprises an annular projection (5b), which extends into the rotary valve (4).

6. A shut-off device according to claim 1 or any of the following claims, characterized in that a sealing ring (7) is attached at the inlet opening (2) and bears on the surface of the rotary valve (4).

7. A shut-off device according to claim 1 or any of the following claims, characterized in that a line (25) for supplying a purging fluid opens in the region between the rotary valve (4) and the valve member (5) and/or adjacent to the valve seat (11).

**Revendications**

1. Dispositif de fermeture comprenant un tiroir tournant (4) qui est disposé dans une enveloppe (1), qui a un orifice d'entrée et un orifice de sortie et qui est destiné à interrompre le passage de matière susceptible de ruisseler et de s'écouler, en fermant de manière étanche au gaz l'orifice de sortie (3), tout en fermant l'orifice d'entrée (2), un obturateur (5) étant monté élastiquement sur le tiroir tournant et coopérant avec le siège de vanne (11) de l'orifice de sortie, caractérisé en ce que l'obturateur est monté tournant, par rapport à un axe (II-II) s'étendant perpendiculairement à l'axe de rotation du tiroir tournant, et en ce que, entre l'obturateur et le tiroir tournant, est prévu, à côté de l'axe de rotation de l'obturateur, un ressort de compression (10) qui applique de manière excentrée une pression à cet obturateur.

2. Dispositif de fermeture suivant la revendication 1, caractérisé en ce que l'obturateur (5) a la forme d'une calotte sphérique, et l'enveloppe (1) comporte une surface de guidage (28) adaptée à la surface de la calotte.

3. Dispositif de fermeture suivant la revendication 2, caractérisé en ce que, entre le tiroir tournant (4) et l'obturateur (5), est disposé coaxialement à l'axe de rotation de l'obturateur un disque de centrage (27), qui est logé dans un évidement (29, 30) du tiroir tournant et de l'obturateur.

4. Dispositif de fermeture suivant la revendication 3, caractérisé en ce que le ressort de compression (10) est disposé dans un perçage (31) du disque de centrage (27).

5. Dispositif de fermeture suivant la revendication 2, caractérisé en ce que l'obturateur (5) pénètre, par une partie saillante (5b) annulaire, dans le tiroir tournant (4).

6. Dispositif de fermeture suivant la revendication 1 ou l'une des suivantes, caractérisé en ce que, sur l'orifice d'entrée (2), est disposée une bague d'étanchéité (7) qui s'appuie sur la surface du tiroir tournant (4).

7. Dispositif de fermeture suivant la revendication 1 ou l'une des suivantes, caractérisé en ce que, dans la partie comprise entre le tiroir tournant (4) et l'obturateur (5) et/ou dans la partie du siège de la vanne (11), débouche un conduit d'amenée (25) d'un fluide de rinçage.

Fig.1

II

2

8

8

7

9

4

1

18

16

10

4a

11

11

20

3

5

II

Fig.3

21    20a

4

24

10

22    20

5

Fig.2

I

9

14

15

18

25

4

4a

5

20

I

Fig.4

5

20

22

6

## Fig.5

## Fig.6

## Fig.7